# EUROPEAN PATENT SPECIFICATION

(11) **EP 0 616 707 B1**
(45) Date of publication and mention of the grant of the patent: **08.09.1999**
(21) Application number: 92906036.6
(22) Date of filing: 09.12.1991
(51) Int. Cl.: G06F 9/44

(54) **EXPERT SYSTEM WITH FAST PATTERN MATCH DETERMINATION BY EQUIVALENCE CLASS PROJECTION MEANS**
EXPERTEN SYSTEM MIT SCHNELLEM PATTERN-MATCHING UNTER VERWENDUNG VON ÄQUIVALENZ-KLASSEN
SYSTEME EXPERT AVEC DETERMINATION RAPIDE DE CONCORDANCE AVEC UN MODELE A l'AIDE D'UN SYSTEME DE PROJECTION DE CLASSE D'EQUIVALENCE

(43) Date of publication of application: 28.09.1994
(73) Proprietor: DIGITAL EQUIPMENT CORPORATION, Maynard, Massachusetts 01745 (US)
(72) Inventor: KIRK, Steven, A., Chelmsford, MA 01824 (US); BARABASH, William, Acton, MA 01720 (US); YERAZUNIS, William, S., Marlboro, MA 01752 (US)
(74) Representative: Maggs, Michael Norman
(86) International application number: US9109205
(87) International publication number: WO9312482

(56) References cited:
- PROCEEDINGS. 7TH IEEE CONFERENCE ON ARTIFICIAL INTELLIGENCE vol. 19, February 1991, LOS ALAMITOS, CA pages 76 - 80; D.N GORDIN: 'Set-oriented constructs for rule-based systems'

## Description

### Background of the Invention

This invention relates to pattern matching, such as arises in complex data base systems, and more specifically, in rule-based artificial intelligence systems (i.e., so-called "expert systems") in which the various conditions defined by the rules are structured as a network to allow efficient determination of which rules are applicable to data obtained by the system.

An expert system is based on a computer program which comprises a set of rules and definitions of types of data that will be processed according to the rules. By a process known as "inference", the system performs matching between conditions set forth in the set of rules and data elements of the defined types in a working data base that has been obtained by the system from a user or from other data bases. When a set of data elements satisfies the conditions in one or more of the rules, one of more of the satisfied rules are "fired" (i.e., applied to the data) to change the data elements in the working data base, provide advice to the user or explanations in response to the user's questions, or to take some other action. The inference process is repeated until no rules are found to be satisfied by the data, or the firing of a rule indicates that the inference process is to stop.

In general, the inference process can be thought of as attempting to evaluate a set of objects (all the data elements in the working data base) in light of a preexisting set of constraints (the conditions in the rule) to find a tuple of objects which satisfy the set of constraints (the combination of data elements which satisfy the rule).

Each rule includes one or more conditions (collectively referred to as the "left-hand side" of the rule) which, if satisfied by the data, indicate that the rule is applicable. After the conditions of the rules are evaluated to determine which rules are applicable, one or more of the applicable rules is fired. The operations to be performed when the rule is fired are listed in the "right-hand side" of the rule. One way to determine which rules are applicable is to test every condition in the left hand sides of all the rules each time a new element of data is obtained by the system. With this scheme, each condition is retested each time the working data base is altered by addition or deletion of data, even if the altered data could not possibly have changed the result of that condition.

It is known that during operation of an expert system the largest proportion of time is spent in evaluating the conditions in the rules to determine which rules are applicable. Thus, to improve the performance of expert systems, it is necessary to minimize the amount of time spent in evaluating the conditions in the rules.

One approach based on set-oriented constructs is given in D.N. Gordin et al.: "Set oriented constructs for rule-based systems", 7 th Proc. on the IEEE Conf. on AI, vol. 19, pages 76-80, Los Alamitos, CA.Feb. 91. These constructs allow arbitrary amounts of data to be matched and changed within the execution of a single rule.

Another approach taken to minimize condition evaluation time uses a TREAT-net, which is fully described by Daniel Miranker in TREAT: A New and Efficient Match Algorithm for AI Production Systems (Research Note in Artificial Intelligence-Morgan Kaufmann Publishers, Inc.). A TREAT-net is a data structure by which the conditions of all rules are evaluated in a network of nodes. The conditions of the rules are tested in select nodes (and their associated memories) that are interconnected by a set of Join nodes to represent the various combinations of conditions that are specified in the left-hand sides of the rules. Tokens that represent data elements, or sets of data elements, in the working data base are passed via the interconnections of the nodes through the TREAT-net as the data elements pass various tests and combinations of tests. The TREAT-net terminates at result nodes that correspond to respective individual rules. If the left-hand side of a rule is satisfied, the TREAT-net stores a token, representing the set of data elements which satisfy the condition of the rule, in the result node corresponding to that rule. The set of tokens supplied to the result node is known as a conflict set because it contains tokens representing all possible combinations of data elements satisfying the conditions.

Another approach taken to minimize the condition evaluation time in some expert systems has been to structure the left-hand sides of the rules as a "discrimination net". such a so-called "reticular" net or RETE-net. A RETE-net more efficiently determines which rules are applicable by testing. when the working data base is changed, only those conditions having results that may have changed in response to the changed data in the working data base.

A RETE-net, which is more fully described by Charles L. Porgy and Susan J. Shepard in RETE: A fast match algorithm (AI Expert, January 1987), consists of interconnected nodes, including a set of 1-input nodes (including associated memories) and a set of 2-input nodes (also including associated memories). Data may be thought of as being flowing through the RETE-net via the interconnections. Each node receives tokens representing data elements, or sets of data elements, from the working data base or from another node, processes the received data, and possibly generates other tokens representing data to be passed to another node through the interconnections. The 1-input nodes evaluate conditions relating to a single data element, and the 2-input nodes evaluate conditions concerning the relation between different data elements, or sets of different data elements. The RETE-net terminates at result nodes that correspond to respective individual rules. If the left-hand side of a rule is satisfied. the RETE-net stores a token, representing the data elements satisfying the conditions of that rule, in the result node corresponding to that rule. The tokens in the result node is known as a conflict set because it contains all the tokens representing the data elements which satisfy the conditions of the rule.

Operation of an expert system includes two steps, compilation and execution. Before compilation, a programmer generates an expert system source program, defining the rules and data definitions of the expert system. This source program is processed by a compiler to generate an executable program, and associated data structures, which can then be executed to perform the operations of the expert system. The data structures generated during compilation include a RETE-net or TREAT-net for evaluating the left-hand sides of the rules.

Before execution, the compiled executable program and associated data structures, including the RETE-net or TREAT-net for evaluating the left-hand sides of the rules, are loaded into a memory of a computer system. In addition, a portion of that memory is allocated to a working data base for containing actual data elements to be processed by the expert system. This computer system will perform the inference process, and is known as an inference engine. The executable program is then run by the inference engine to process the actual data elements in the working data base through the RETE-net or TREAT-net and actually perform the expert system functions.

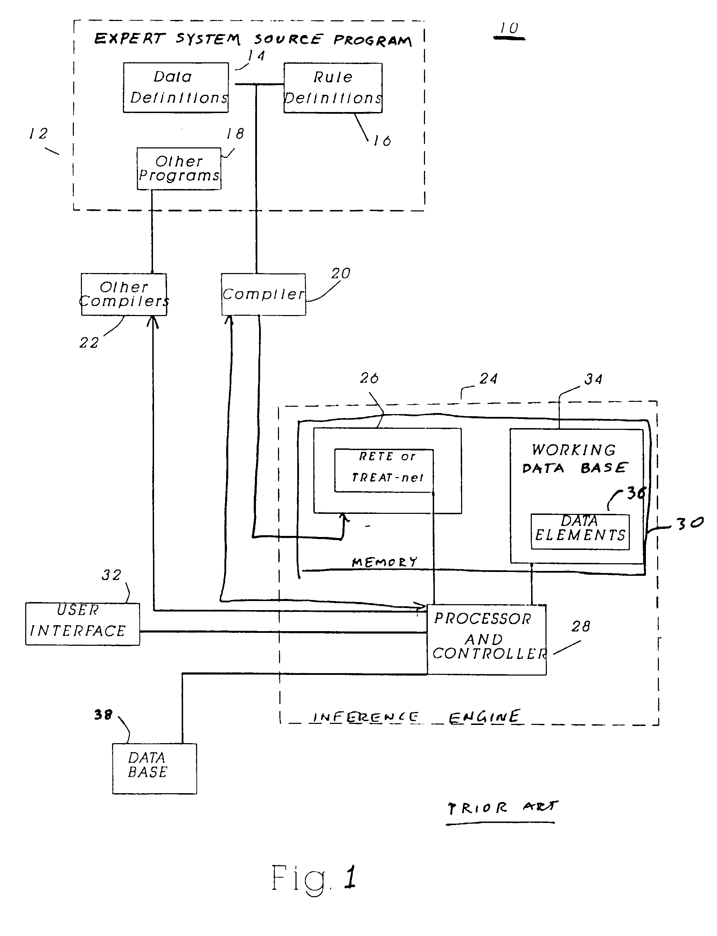

Fig. **1** is a block diagram of a known computer system embodying an expert system including a RETE-net or TREAT-net. In Fig. **1**. expert system **10** includes an expert system source Program **12**, and a compiler **20** which compiles the expert system source program **12** to generate an executable program (not shown) and associated data structures (described in more detail below). The expert system **10** may be created using any suitable expert svstem programming language (such as OPS5). Expert system source program **12** includes a set of programmer supplied data definitions **14** that identify classes of data which the expert system **10** will use during execution. During execution, memory will be allocated to a working data base for storing actual data elements defined by the data definitions **14**. For example, if expert system source program **12** defines an expert system for giving advice concerning dressing people, data definitions **14** might include classes such as SHIRTS, PANTS, TIES and SOCKS.

Expert system source program **12** also includes a set of programmer supplied rules, identified by rule definitions **16**, which describe the way in which actual data that fits the data definitions **14** will be manipulated by the expert system **10** during execution, and how expert system **10** will interact with the user and the rest of the computer system.

Expert system source program **12** may also include programmer defined links to other source programs **18** in other languages (such as C, FORTRAN, BASIC, etc.) for performing tasks, such as accessing remote databases or making statistical computations, when called upon during the execution of expert system **10**. These other source programs **18** in other languages are compiled by respective compilers **22** for those other languages to generate respective executable programs and associated data structures.

The programmer supplied data definitions **14** and rule definitions **16** are compiled by compiler **20** and the resulting executable program and associated data structures stored in a portion (not shown) of memory **30** in an inference engine **24**. In particular, section **26** of memory **30** is allocated to the RETE-net or TREAT-net representing the left-hand sides of the rule definitions **16**, and section **34** of memory **30** is allocated to the working data base. which may store a plurality of actual data elements **36**. The other programs **18** are compiled by their own compilers **22** and the executable programs and associated data structures are stored in other portions (not shown) of memory **30**. A processor and controller **28** in inference engine **24** controls the operation of compilers **20** and **22** during compilation. Processor and controller **28** also executes the executable expert system program generated by compiler **20** and receives data from and sends data to a user through user interface **32** during execution.

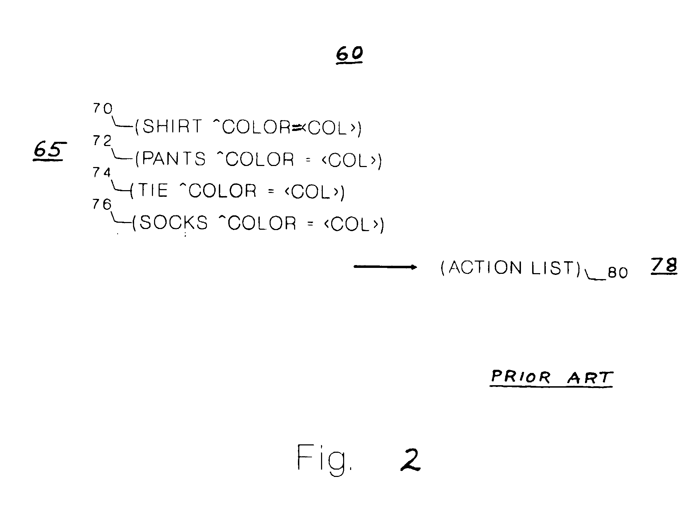

Fig. **2** is textual diagram illustrating a known OPS5 source representation of a portion of a rule **60** which may be used in the expert system illustrated in Fig. **1**. For rule **60** in Fig. **2**, previously processed data definitions (not shown) have defined, in known manner, data classes: SHIRT, PANTS, TIE and SOCKS. Also in known manner, all of the data classes can have attributes (indicated by the prefix "^") associated with them. In Fig. **2**, all the data classes have had the attribute ^COLOR associated with them. Attributes associated with a class are assigned a value, which may be tested by the conditions of the left-hand sides of rules in the expert system.

In rule **60**, the left-hand side **65** consists of conditions on lines **70, 72, 74** and **76**. Line **70** indicates that a data element of the SHIRT class must be present in the working data base **34** (of Fig. **1**) for the rule to be satisfied. In addition, the value of the ^COLOR attribute of the SHIRT class data element is stored in a variable <COL> (denoted by a pair of brackets <...> enclosing the name of the variable). Lines **72** to **76** indicate that data elements of the PANTS class, TIE class and SOCKS class, respectively, must also be present, and, in accordance with the OPS5 language, the value of the ^COLOR attributes of the data elements of these classes must be the same as the value previously stored in the <COL> variable. (I.e. the ^COLOR attribute of the PANTS class, TIE class and SOCKS class data elements must all have the same value as the ^COLOR attribute of the SHIRT class data element).

The rule **60** is completely satisfied only if the data passes all tests **70, 72, 74**, and **76**. If rule **60** is completely satisfied, a token containing references to the four data elements which satisfy rule **60** is stored in a result node associated with rule **60**.

Referring again to Fig. **2**, the variable <COL> as used in line **70** can be differentiated from the variable <COL) as used in lines **72** to **74**. The variable <COL> used in line **70** is known as a 'bound' variable. When an OPS5 variable is first used in a rule, the variable acts as a wildcard that matches and is assigned whatever value is in the attribute of the data element from the working database currently being tested. The first time a variable is matched to the value of an attribute of a data element in the working database, the value of that attribute is said to be bound to that variable. Any subsequent use of the same variable in that rule represents the previously bound value. As an example, if the value of the ^COLOR attribute of the SHIRT class data element is blue, then the variable <COL> as used in **70** is assigned the value blue. When the variable <COL> is used again in the rule **60**, on either the left hand side **65** (as in lines **72** to **76**) or the right hand side **78**, it represents the value blue.

The variable <COL> as used in lines **72** to **76** is known as a 'tested' variable. A tested variable is one that has been previously referred to in a rule, and, thus, has had a value assigned to it. The value of the indicated attribute of the data element currently being tested is compared to the value previously assigned to the variable (at the first occurrence of that variable), and must be equal to it for consistency. Continuing the above example, if the variable <COL> in line **70** was assigned a value of blue, then in lines **72** to **76** the respective values of the ^COLOR attributes of the PANTS class, TIE class and SOCKS class data element are all compared to the value of the variable <COL> and must equal it for consistency. That is, only if the values of the ^COLOR attributes of the PANTS class, TIE class and SOCKS class data elements are all blue are the conditions of lines **72** to **76** satisfied.

The right hand side **78** of the rule **60** contains an "action list" **80** (not shown in detail) that is executed if the rule is fired. For example, the firing of the rule might cause system **10** in Fig. **1** to obtain more data or compute the value of some data (for example, by executing one of other programs **18**). A rule firing may also cause some external action to be taken (such as displaying data or changing an external database **38**).

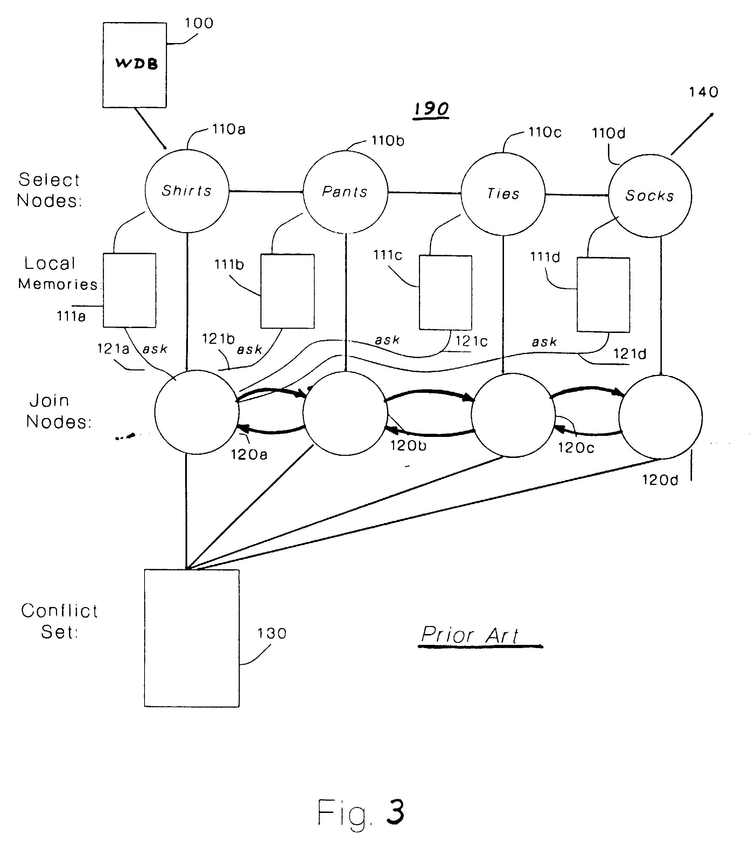

Fig. **3** is a data flow diagram of a known TREAT-net **190** corresponding to the conditions of rule **60** of Fig. **2**. In Fig.**3**, a working data base WDB node **100** supplies tokens representing all the data elements **36** in the working data base **34** (of Fig. **1**) to the TREAT-net **190**. These tokens are passed, unchanged, by TREAT-net **190** to a terminal node **140**. Terminal node **140**, may be coupled to subsequent select nodes (not shown) associated with other rules (also not shown). TREAT-net **190** evaluates the tokens from WDB node **100** and supplies a set of tokens containing references to data elements satisfying rule **60** to a result node **130** for rule **60**. The tokens supplied to result node **130** represent the conflict set for rule **60**.

In general, the conditions of lines **70** to **76** of rule **60** are evaluated by TREAT-net **190**, in a known manner. In Fig. **3**, the select nodes **110a - 110d** evaluate the portions of the conditions on lines **70 - 76**, respectively, relating only to that condition. The join nodes **120a - 120d** evaluate the portions of the conditions on lines **70 - 76** related to respectively different conditions. The result of the tests performed in the join nodes **120a - 120d** are supplied to the result node **130**.

Each select node (**110a - 110d**) has a single input port (shown generally on the left side of the node) at which tokens representing data elements from the working data base are received. Each select node (**110a - 110d**) also includes a pass-through port (shown generally on the right side of the node) from which all the tokens supplied to the input port of the node are passed to subsequent nodes in the TREAT-net **190** unchanged. Each select node (**110a - 110d**) also has an output port (shown generally at the bottom of the node) from which tokens representing data elements satisfying the particular test implemented in that node are passed to subsequent nodes in the TREAT-net **190** (as will be described in more detail below). Finally, each select node **110a - 110d** has a respective local memory **111a - 111d** associated with it in which copies of tokens supplied to the output port are stored.

Each join node **120a - 120d** has an input port, shown generally on the top of the node, at which tokens from preceding select nodes are received. Each join node also includes interconnections ports shown generally on the sides of the node, for sending and receiving data packets representing sets of partially matched data tokens from one join node to another. For simplicity, interconnection ports are only illustrated for join nodes adjacent each other in Fig. **3**. It is understood, however, that any join node may send or receive such data packets from any other. Each join node **120a - 120d** also has an output port, shown generally on the bottom of the node, from which tokens, representing combinations of data elements satisfying the rule, are supplied to the result node **130**. In addition, each join node **120a - 120d** is interconnected to all the local memories **111a-111d** of all the select nodes **110a - 110d** via ask data paths. However, only ask data paths **121a - 121d** for join node **120a** are illustrated in order to simplify Fig. **3**.

Specifically, TREAT-net **190** includes select nodes **110a-110d** having serially coupled input and pass-through ports coupled between the WDB node **100** and terminal node **140**. The output ports of select nodes **110a - 110d** are coupled to respective input ports of join nodes **120a - 120d**. join nodes **120a - 120d** are all interconnected via their respective interconnection ports. The output ports of all of join nodes **120a - 120d** are coupled to the result node **130**. Join node **120a** has respective ask data paths **121a - 121d** coupled to all of the local memories **111a - 111d** of all the select nodes **110a - 110d**. Join nodes **120b - 120d** similarly have ask data paths (not shown) coupled to all of the local memories **111a - 111d** of all the select nodes **110a - 110d**.

In operation, select node **110a** receives tokens from the WDB node **100** representing the data elements **36** stored in the working data base **34** (of Fig. **1**) at its input port and passes them, unchanged, to the pass through port. Select node **110a** corresponds to the condition on line **70** of Fig. **2** and evaluates the data element represented by each token to determine whether it is of the SHIRT class. If it is of the SHIRT class, that token is stored in the local memory **111a** of select node **110a** and passed to join node **121a** via its output port. Select nodes **110b - 110d** operate in a similar manner to receive tokens at their respective input ports, pass these tokens, unchanged, to their respective pass through ports, and place tokens of the PANTS class, TIE class and SOCKS class, respectively, in their respective local memories (**111b - 111d**) and pass those tokens to their respective output ports.

In combination, join nodes **120a - 120d**, in known manner, construct tokens representing combinations of data elements which satisfy the conditions of rule **60** of Fig. **2**. When any one of join nodes **120a - 120d** receives a token, representing a data element, from its corresponding select node **110a - 110d**, a data packet is aenerated. The data packet consists of a list of records, each record containing a set of data element identifiers and an indication of the number of such identifiers contained in that record. That data packet is passed from join node to join node until each join node has been traversed. Data obtained from the ask lines **121a - 121d** is used to determine to which of the join nodes **120a - 120d** the packet is to be passed. For example, it is known to obtain the number of entries in each of the local memories in the other select nodes **110a - 110d** to determine which join node should next process the data packet.

When each join node receives the data packet, it sequentially compares the data elements referred to in each of the records in the data packet to the data elements referred to in the local memory of its corresponding select node to determine whether any combinations of data elements satisfy the tests performed by that join node. If any such combinations are found, a record for each is created in the data packet. The new record consists of the data element identifiers from the record from the data packet currently being tested, with an identifier for the matching data element from the local memory appended to it. The indicator of the number of data element identifiers in that record in then incremented.

When all join nodes have been traversed, the records in the data packet represent the combinations of data elements matching the rule. A token is generated representing each combination represented by each record in the data packet, and the generated tokens are passed to the result node **130** via the output port of the last join node traversed where they become part of the conflict set for rule **60**.

Each token in the conflict set represents a set of data elements which, in combination, satisfy rule **60**, and indicate that rule **60** is now available to fire by executing the action list **80** in the right hand side **78** of rule **60**. The process of selecting a rule to fire, and the firing of that rule will be discussed in detail below.

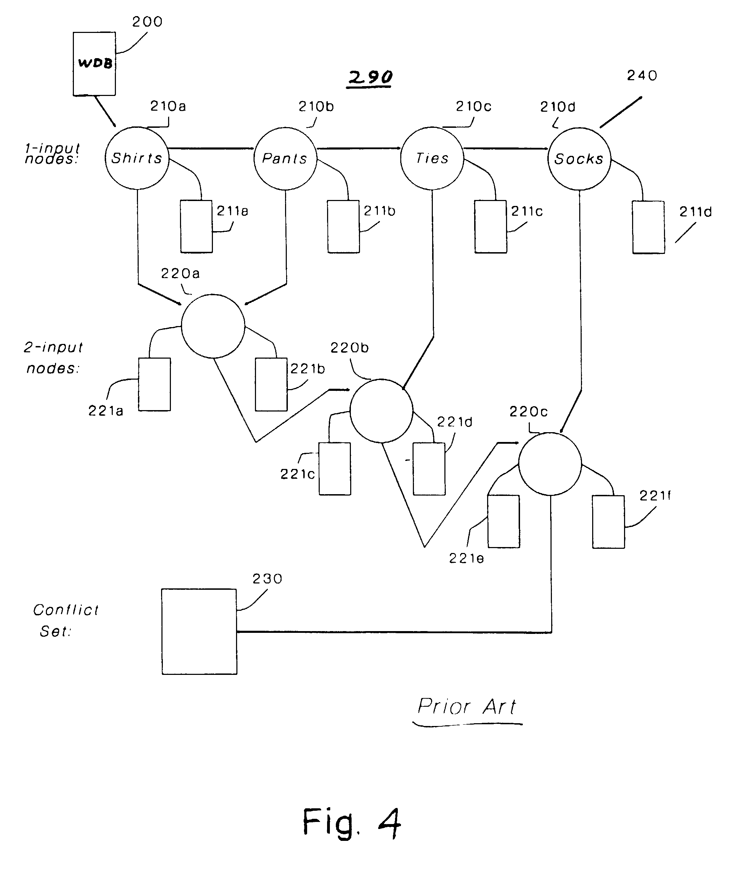

Fig. **4** is a data flow diagram of a known RETE-net **290** corresponding to the conditions of rule **60** of Fig. **2**. In Fig. **4**, a working data base WDB node **200** supplies tokens representing all the data elements **36** in the working data base **34** (of Fig. **1**) to the RETE-net **290**. These tokens are passed, unchanged, by RETE-net **290** to a terminal node **240**. Terminal node **240**, may be coupled to subsequent RETE-net nodes (not shown) associated with other rules (also not shown). RETE-net **290** evaluates the tokens from WDB node **200** and supplies a set of tokens representing respective combinations of data elements satisfying rule **60** to a result node **230** for rule **60**. The tokens supplied to result node **230** represent the conflict set for rule **60**.

The conditions of rule **60** of Fig. **4** are represented in known manner by a network of 1-input nodes **210a - 210d** and 2-input nodes **220a - 220c**. The compiler **20** (of Fig. **1**) generates the structure of RETE-net **290**, in a known manner, in response to the data definitions **14** and rule definitions **16**.

Each 1-input node (**210a - 210d**) has a single input port (shown generally on the left hand side of the node) at which tokens representing data elements from the working data base are received; a pass-through port (shown generally on the right side of the node) from which all the tokens supplied to the node at the input port are passed to subsequent nodes in the RETE-net **290** unchanged; and an output port (shown generally at the bottom of the node) from which tokens representing data elements satisfying the particular test implemented in that node are passed to subsequent nodes in the RETE-net (as will be described in more detail below). Each 1-input node **210a - 210d** also has a respective memory **211a - 211d** associated with it

The tests implemented in 1-input nodes (**210a - 210d**) relate to single data elements from the working data base. In operation, each 1-input node performs, in known manner, its designated test on each token which is received at its input port. If the data represented by that token satisfies the test implemented in that node, that token is stored in the memory associated with the node and that token is passed through the output port to subsequent nodes in the RETE-net **180**.

Each 2-input node (**220a - 220c**) has a first, or left hand, input port (shown generally on the upper left side of the node) and a second, or right hand input port (shown generally on the upper right side of the node). The left hand input port receives tokens either representing data elements from the working data base satisfying tests implemented in preceding 1-input nodes (as in 2-input node **220a**), or representing sets of data elements satisfying tests implemented by preceding 2-input nodes (as in 2-input nodes **220b** and **220c**). The right hand input port receives tokens representing data elements from the working data base satisfying tests implemented in preceding 1-input nodes. Each 2-input node (**220a - 220c**) further includes an output port (shown generally on the bottom of the node) from which tokens representing sets of data elements satisfying the test implemented by that 2-input node (**220a - 220c**) are passed to subsequent nodes in the RETE-net **290**. Each 2-input node **220a - 220c** also has respective left memories **221a, 221c** and **221e** and respective right memories **221b, 221d** and **221e** associated with it.

The tests implemented in 2-input nodes (**130a - 130c**) relate to the relationship between different data elements in the working data base. In general operation, each 2-input node, in known manner, stores each token received from the left hand input port in the left hand, and stores each token received from the right hand input port in the right hand memory. Whenever a token is received from either input port, the newly received token is stored in the corresponding memory. Then the data element or set of data elements represented by that newly received token are combined with the data elements represented by every token stored in the other memory. A token representing each such combination is then passed to the output port of that 2-input node. In general operation, therefore, a 2-input node will produce a set of tokens, termed the cross-product, representing the respective combinations of the data element or set of data elements contained in every token supplied to the left hand input port with the data elements from every token supplied to the right hand input port. The number of such tokens in this set is equal to the product of the number of tokens received at the first input port times the number of tokens received at the second input port.

However, the 2-input node may also perform a comparison between the different data elements represented by the newly received and the previously stored tokens. In such a case, only tokens representing those combinations of data elements which satisfy the condition tested for in the 2-input node will be included in the set of tokens passed to the output port of the 2-input node. For example, when a previously bound variable is tested in a subsequent condition, the value of the attribute of the data element referenced in the subsequent condition is compared to the value previously stored in the variable in the 2-input node. Only tokens representing combinations of data elements in which the values of the attribute and variable are the same are passed through the output port to subsequent sections of the RETE-net **290**.

Specifically, RETE-net **290** is formed of 1-input nodes **210a-d** having serially connected input and pass-through ports coupled between the WDB node **200** terminal node **240**. Tokens representing all the data elements in the working data base pass through this path. The output ports of 1-input nodes **210a** and **210b** are interconnected by 2-input node **220a**. The output ports of 2-input node **220a** and 1-input node **210c** are interconnected by 2-input node **220b**. The output ports of 2-input node **220b** and 1-input node **210d** are interconnected by 2-input node **220c**, and the output port of 2-input node **220c** is coupled to result node **230**.

In operation, by way of an example, assume that the working data base contains data elements of the SHIRT class irepresenting shirts), data elements of the PANTS class (representing pairs of pants), data elements of the TIE class (representing ties), and data elements of the SOCKS class (representing socks). Data elements of other classes (not shown or discussed below) may also be present in the working data base. Further assume that each data element of the SHIRT class, PANTS class, TIE class and SOCKS class has a ^COLOR attribute having a value (indicating the color of the represented item of clothing). These data elements may also have other attributes.

At 1-input node **210a** tokens representing all the data elements in the working data base are passed from input port to pass-through port, but only those tokens representing shirts, i.e., the tokens referring to data elements of the SHIRT class, will be stored in the node memory **211a** and passed through to the output port to continue through the RETE-net **290**. In a similar manner, at 1-input nodes **210b - 210d** only tokens referring to data elements of the PANTS class, TIE class and SOCKS class, respectively, will be stored in the respective node memories **211b - 211d** and continue through the RETE-net **290**.

At 2-input node **220a**, the tokens from 1-input node **210a**, containing references to SHIRT class data elements, are received at the left hand input port. These tokens are stored in the left hand memory **221a**. As each token is received, the value of the ^COLOR attribute of the SHIRT class data element contained in that token is bound to the variable <COL>. Then each token stored in the right hand memory **221b**, representing PANTS class data elements, is evaluated in the following manner. The value of the ^COLOR attribute of the PANTS class data element contained in the previously stored token in the right hand memory **221b** is then compared to the value in the <COL> variable. If the values are the same, then a token referring to the combination of the matching two data elements is generated, and that token is passed to the output port of 2-input node **220a**.

The tokens from 1-input node **210b**, containing references to PANTS class data elements, are received at the right hand input port. These tokens are stored in the right hand memory **221b**. As each token is received, it is compared to all the tokens previously stored in the left hand memory **221a** in the following manner. The value of the ^COLOR attribute of the SHIRT class data element contained in each such previously stored token is bound to the variable <COL>. Then the value of the ^COLOR attribute of the PANTS class data element contained in the newly received token from the right hand input port is then compared to the value in the <COL> variable. If the values are the same, then a token referring to the combination of the matching two data elements is generated, and that token is passed to the output port of 2-input node **220a**.

The 2-input nodes **220b** and **220c** operate in a similar manner: binding the variable <COL> to the value of ^COLOR attribute of the SHIRT class data element contained in each token either newly received from the left hand input port, or previously stored in the left hand memories **221c** or **221e**, respectively, and comparing the value of the <COL> variable with the value of the ^COLOR attribute of the TIE class or SOCKS class data element respectively contained in the token either previously stored in the right hand memory **221d** or **221f,** respectively, or newly received from the right hand input port. If the values are the same, then a token referring to the combination of the matching data elements is generated, and that token is passed to the output port of 2-input node **220b** and **220c**.

In either case, the amount of time spent by the TREAT-net or RETE-net in evaluating the data elements in the working data base typically takes a majority of the execution time of the expert system. It is desirable that the time spent in evaluating the data element in the working data base be minimized to improve the operation of such an expert system.

According to the present invention, there is provided an expert system according to the characterising portion of Claim 1.

The inventors have realized that in the prior art TREAT-net or RETE-net implementations of rule based expert systems, at times many tokens may be passed through the network which, with respect to the rule being processed, are indistinguishable. Because these tokens are indistinguishable, processing of all these tokens by the TREAT-net or RETE-net corresponding to this rule is unnecessary, and results in unnecessary time being spent in condition evaluation. If tokens representing data elements which are indistinguishable with respect to the rule being evaluated are grouped into one class, termed an equivalence class, and a single toke representing that equivalence class is passed through the TREAT net or RETE-net (instead of all the separate tokens), then processing time can be minimized and performance of the expert system optimized.

In the above example, the working data base may contain many tokens containing SHIRT class data elements having the same value for the ^COLOR attribute. This could be because other attributes (not shown) have different values (a blue dress shirt and a blue flannel shirt and a blue polo shirt etc.), or simply because these tokens represent several different items having the same attributes (i.e. 10 identical blue shirts). With respect to rule **60** of Fig. **2**, these different tokens would all be processed in prior art systems, but the results of the processing would be identical.

More specifically, in the above example, the significant inter-object constraints referred to above relate to the use of a bound and/or tested variable in a rule. Compiler **20** of Fig. **1**, will recognize such significant inter-object constraints. In rule **60** of Fig. **2**, the significant inter-object constraint relates to the variable <COL>, which is compared to the ^COLOR attributes of all the SHIRT class, PANTS class, TIE class and SOCKS class data elements. The equivalence classes aenerated are: all SHIRT class data elements having the same value in the ^COLOR attribute, all PANTS class data elements having the same value in the ^COLOR attribute, all TIE class data elements having the same value in the ^COLOR attribute and all SOCKS class data elements having the same value in the ^COLOR attribute. Then single tokens representing each such equivalence class are processed by the TREAT-net or RETE-net. Finally, when a combination of equivalence classes is selected causing the rule to fire, the members of each equivalence class in the selected token in the conflict set is evaluated, and one member from each is selected to form the combination of data elements which is considered to have caused the rule to fire. This is called mapping back the equivalence classes to the data elements.

In addition, for rule based expert systems in particular, there is no need to maintain a complete list of combinations of data elements satisfying the rules. Instead, only the single set, representing the "best" combination (determined in a known manner) need be maintained for each combination of equivalence classes in the conflict set. This represents a savings in the amount of memory needed to maintain the conflict set.

### Brief Description of the Drawings

The improvements of the present invention over the prior art and the advantages resulting therefrom will become more apparent upon reading the following description of the preferred embodiments and referring to the drawings in which:
FIG. **1** is a functional block diagram of computer system implementing an expert system;
FIG. **2** is a textual diagram representative of a rule used in the system of FIG. **1**;
FIG. **3** is a data flow diagram of a TREAT-net representation of the rule of FIG. **2**;
FIG. **4** is a data flow diagram of a RETE-net representation of the rule of FIG. **2**;
FIG. **5** is a schematic representation of the method in accordance with the present invention;
FIG. **6** is a data flow diagram of a TREAT-net representation of the rule in FIG. **2** in accordance with the present invention, further illustrating the contents of memories associated with selected nodes in the TREAT-net; and
FIG. **7** is a diagram of a RETE-net representation of the rule in FIG. **2** in accordance with the present invention, further illustrating the contents of memories associated with selected nodes in the RETE-net.

### Description of the Preferred Embodiments

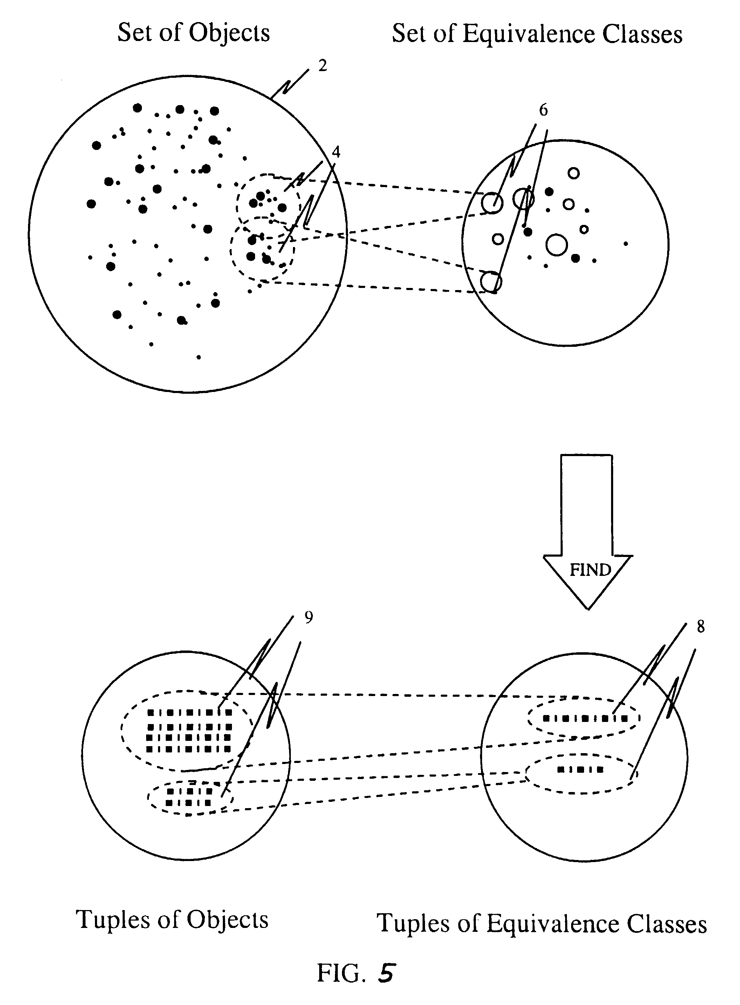

Fig. **5** is a schematic illustration of the method of finding a set of tuples of objects from a general set of those same objects that satisfy a given set of constraints in accordance with the present invention. The method begins with a given set of objects **2**. Significant inter-object constraints **4** are then identified from a given set of constraints (as described in more detail below). A set of equivalence classes **6** from the set of objects **2** is generated based on the significant inter-object constraints **4**. An equivalence class is a set of objects that, for the purposes of a complex data base query (such as joins over a non-key field) in a data base system, or matching in a particular rule in a rule based expert system, are indistinguishable and completely interchangeable with respect to the data base join being performed or rule being evaluated, respectively. The equivalence classes **6** themselves (and not the individual members of that equivalence class) are then evaluated to find a set of tuples of equivalence classes **8** whose members all satisfy the set of constraints (also described in more detail below). Finally, the set of tuples of equivalence classes **8** are mapped back to the set of real objects **2** to find the set of tuples of real objects **9** from the set of real objects **2** that satisfy the set of constraints.

In rule based expert systems using TREAT-nets or RETE-nets, significant constraints are identified by determining attributes of data elements which are compared to attributes of other data elements. Such constraints may be identified by either of two methods. First, if an attribute of a data class is bound to a variable in one condition of a rule, and that variable is used as a tested variable in another condition of that rule, that attribute of that data class is deemed a significant constraint, or a significant attribute. Second, if an attribute of a data class is tested against a variable which is previously bound in another condition of that rule, that attribute is also deemed a significant constraint, or a significant attribute.

Similarly in data base system queries, a significant constraint can be identified where a non-key field from one table is being compared to a field from another table in a join expression.

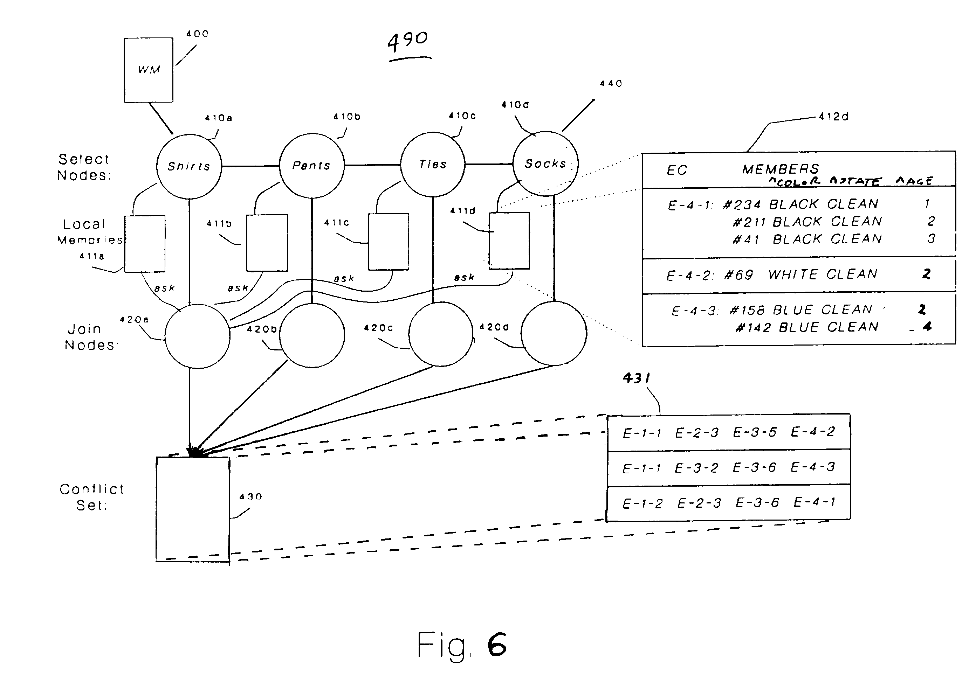

Fig. **6** is a data flow diagram of a TREAT-net **490** operating in accordance with the present invention. In Fig. **6**, the TREAT node is arranged in the same manner as that in Fig. **3**. Unless specifically described, the select nodes **410a-410d** and the join nodes **420a - 420d** operate in the same manner as the corresponding select and join nodes in Fig. **3**, and will not be described in detail below. As in Fig. **3**, select node **410d** evaluates all tokens supplied to its input port by select node **410c** and further processes only those tokens representing SOCKS class data elements. All such tokens are stored in its associated local memory **411d**. However, those tokens stored in local memory **411d** of select node **410d** are stored in an equivalence class table **412d**.

Each entry in the equivalence class table **412d** consists of an equivalence class number (**EC**), which identifies that equivalence class: and members associated with that equivalence class. The equivalence class number **EC** may be generated by any standard hash algorithm based on some significant attribute for which the corresponding select node is testing. Members of any equivalence class consist of an ID number (designated with a "#" prefix in equivalence class table **412d**), which identifies that member, and attributes associated with the member identified by that ID number. The attribute information of the members of the equivalence class table is generated from the corresponding information from the data element contained in each token selected by that select node.

In the case of select node **410d**, the significant attribute of the SOCKS class data elements in rule **60** (of Fig. **2**) is ^COLOR. This can be determined because the ^COLOR attribute is bound to a variable <COL> in the condition on line **70** of rule **60**, and the variable <COL> is tested in another condition of rule **60** (lines **72 - 76**). Therefore, for each uniquely valued ^COLOR attribute in the SOCKS class data elements, there will be a unique equivalence class identified by a corresponding equivalence class number **EC**. Associated with each unique equivalence class will be the set of attributes (^COLOR, ^STATE {clean or dirty} and ^AGE) of each data element from the working data base represented by the tokens that have passed the test of select node **410d**.

If the first token of the SOCKS class passing through select node **410d** has a ^COLOR attribute having the value black (representing a pair of black socks), an equivalence class number, for example, E-4-1 in equivalence class table 412d, is created for all data elements representing black socks, regardless of the values of the other attributes of the SOCKS class data elements. In addition, an ID number is created, for example, #234 in the example of FIG. **6**, that associates a clean black pair of socks that is 1 year old with the equivalence class number E-4-1. Because a new equivalence class has been created, a token representing equivalence class E-4-1 is passed to join node **420d**.

If the next token passing through select node **410d** also represents a pair of black socks, a new equivalence class number is not generated because a black socks equivalence class number already exists, i.e., E-4-1 in the example. Instead, a new ID number, i.e., #211, is created that associates a clean pair of black socks that is 2 years old with the equivalence class number E-4-1. Within an equivalence class, members of that equivalence class may be stored as a standard linked list, as shown in class table **412d** (thereby minimizing storage requirements) or they may be stored in a hash table based on their ID numbers (thereby minimizing the search time required to remove members). Because no new equivalence class was created, no token is passed to Join node **420d** in this case.

If the next token passing through select node **410d** represents a pair of white socks, a new equivalence class number E-4-2 is created for all data elements that represent white socks. In the equivalence class table **412d**, EC E-4-2 is created for data elements representing white socks. This token then has an ID number assigned to it, i.e., #69 in the current example, and becomes an entry which is associated with the clean pair of white socks that are 2 years old. A token representing the newly created equivalence class E-4-2 is passed to join node **420d**. If the next token passing through select node **410d** represents a pair of black socks, a new equivalence class number need not be created because E-4-1 already exists for black socks. This new element will be associated with **EC** E-4-1 and have an ID number #41. This entry represents a clean pair of black socks that are three years old. No token is passed to join node **420d**.

If the next token passing through select node **410d** represents a pair of blue socks, a new equivalence class number **EC** E-4-3 is created for all data elements that represent blue socks. In the equivalence class table **412d EC** E-4-3 is created for blue socks. This token then has an ID number created, i.e., #158 in the current example, and becomes associated with the clean pair of blue socks that are 2 years old. A token representing newly created equivalence class E-4-3 is passed to join node **420d**.

This process of creating new equivalence classes for data elements having uniquely valued significant attributes, assigning each of the data elements an ID number and associating the data element to its corresponding equivalence class and passing tokens representing newly created equivalence classes to subsequent join nodes continues until there are no more tokens passing through select node **410d**.

It is also possible for data elements to be deleted, in a known manner. If a data element is deleted, a token representing that data element is passed through the TREAT-net **490** having the same information, but with an indicator that this data element is to be deleted. If such a token is passed by select node **410d**, and it refers to an entry in equivalence class table **412d**, then that entry is deleted from the equivalence class table **412d**.

For example, if select node **410d** passed a delete token representing the data element having the ID number #41 in equivalence class E-4-1, then that data element is deleted from equivalence class table **412d**. If select node **410d** passed a delete token representing the data element having the ID number #69 in equivalence class E-4-2, then not only will that data element be deleted from the equivalence class table, but that equivalence class, itself, will be deleted. In addition, the entries in the conflict set in result node **430** referring to this equivalence set will also be deleted, in a known manner. Deletion of data elements will be discussed further below.

Select nodes **410a - 410c** operate in a similar manner to store data elements that pass their respective tests in their associated memories **411a-411c** as equivalence class tables. Then, rather than passing tokens representing matching data elements to respective join nodes **420a-420d**, only tokens representing matching equivalence class numbers **EC**s are passed.

The join nodes **420a-420d** act in a similar manner as join nodes **120a - 120d** in Fig. **3**, but instead of passing data packet for evaluating attributes of individual data elements represented by the tokens passed to them (as in Fig. **3**), they pass data packets for evaluating the significant attributes of the equivalence classes represented by the tokens passed to them. Tokens representing combinations of equivalence classes having significant attributes which satisfy the test corresponding to TREAT-net **490** are then passed on to the result node **430** to become members of the conflict set **431**. The conflict set **431** contained in result node **430** then contains a set of tokens representing combinations of equivalence classes having significant attributes whose values satisfy the rule corresponding TREAT-net, and not combinations of individual data elements having attributes whose values satisfy the rule. Further processing of the tokens in the conflict set **431** will be described in detail below.

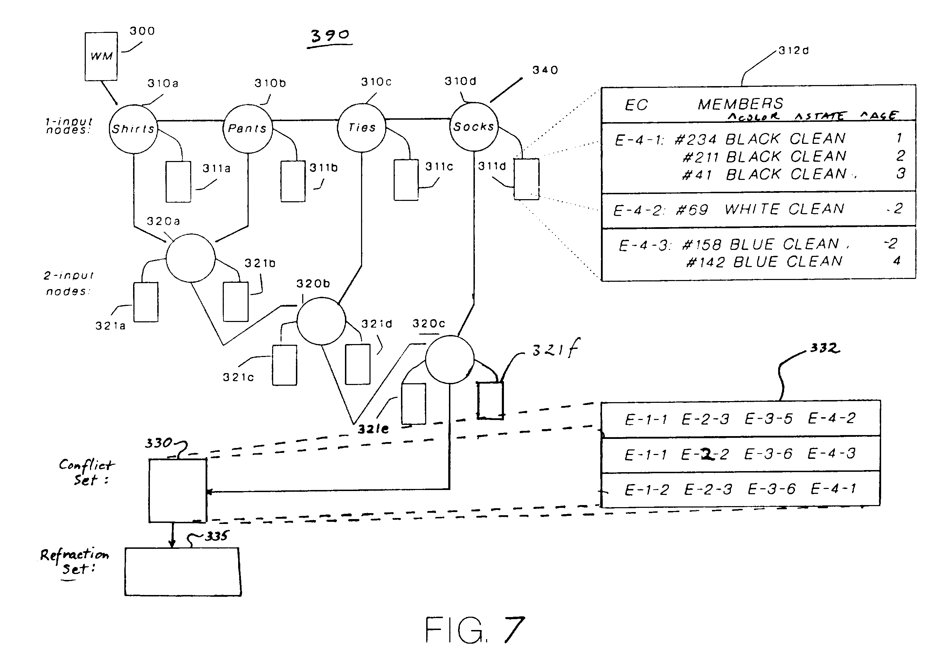

Fig. **7** is a data flow diagram of a RETE-net **390** corresponding to rule **60** of Fig. **2** in accordance with the present invention. In Fig. **7**, unless otherwise described below, elements corresponding to those in Fig. **4** operate in a similar manner, and will not be described in detail below. In Fig. **7**, all tokens received by 1-input node **310d** are stored in its associated memory **311d**. However, the data elements stored in memory **311d** of 1-input node **310d** are stored in an equivalence class table **312d**. Each entry in equivalence class table **312d** consists of an equivalence class number **EC**, and members associated with the equivalence class number. Members of the equivalence class table consist of an ID number and attributes (^COLOR, ^STATE {clean or dirty} and ^AGE) of the data element corresponding to that ID number. The equivalence class number may be generated by any standard hash algorithm based on the significant attribute for which the corresponding 1-input node is testing.

In the case of 1-input node **310d**, the significant attribute (determined as described above) of the SOCKS class data elements is ^COLOR. Therefore, for each SOCKS class data element having a uniquely valued ^COLOR attribute (representing a uniquely colored pair of socks), there will be a unique equivalence class identified by an **EC** number. Associated with each unique equivalence class will be the attributes of actual data elements contained in tokens that have passed the test of the corresponding 1-input node **310d**.

Continuing with the socks example, if the first token passing through 1-input node **310d** represents a data element of the SOCKS class with a ^COLOR attribute having the value black (representing a pair of black socks), an equivalence class number **EC**, for example, E-4-1 in equivalence class table **312d**, is generated for data elements representing black socks. In addition, an ID number is created, for example, #234 in FIG. **7**, and the attributes from the current token are copied into that entry in the equivalence class table. This associates a clean pair of black socks that is 1 year old with the equivalence class number E-4-1. Because a new equivalence class was created, a token representing newly created equivalence class E-4-1, and including the value of the significant attribute of that equivalence class, is passed to 2-input node **320c**. (The other, non-significant, attributes are not included in the token representing the equivalence class. If these attributes are needed for a data element which is a member of that equivalence class, they may be retrieved from the appropriate equivalence class table entry representing that data element.)

If the next token passing through 1-input node **310d** represents another pair of black socks, a new equivalence class number is not generated because a black sock equivalence class number already exists, i.e., E-4-1 in the example. A new ID number, i.e., #211, is created for that token, and the attributes of the data element contained in the token is copied to that entry in the equivalence class table. This associates a clean pair of black socks that is 2 years old with the equivalence class number E-4-1. Within an equivalence class, members of that equivalence class may be stored as a standard linked list, as shown in class table **412d** (thereby minimizing storage requirements) or they may be stored in a hash table based on their ID numbers (thereby minimizing the search time required to remove members). In this case, no token is passed to 2-input node **320c**.

If the next token passing through 1-input node **310d** represents a pair of white socks, a new equivalence class number E-4-2 is created for all data elements that represent white socks. In the equivalence class table **312d** equivalence class number EC E-4-2 is created for data elements representing white socks. The equivalence class table entry representing the first pair of white socks then has an ID number created, i.e., #69 in the current example, and that entry becomes associated with the clean pair of white socks that are 2 years old represented by the current token. A token representing newly created equivalence class E-4-2 is passed to 2-input node **320c**. If the next token passing through 1-input node **310d** represents a pair of black socks, a new equivalence class number need not be created because E-4-1 already exists for black socks. This new data element will be associated with E-4-1 and have an ID number #41. This represents a clean pair of black socks that are three years old. Again, no token is passed to 2-input node **320c**.

If the next token passing through 1-input node **310d** represent a pair of blue socks, a new equivalence class number E-4-3 is created for all data elements representing blue socks. In the equivalence class table **312d** equivalence class number **EC** E-4-3 is created for data element representing blue socks. The first data element representing a pair of blue socks then has an ID number created, i.e., #158 in the current example, the attributes of that data element are stored in that entry and that entry becomes associated with the clean pair of blue socks that are 2 years old. A token representing newly created equivalence class E-4-3 is passed to 2-input node **320c**.

This process of creating new equivalence classes for data elements having uniquely valued significant attributes, associating each of the data elements via an ID number to its corresponding equivalence class and passing tokens representing newly created equivalence classes to subsequent 2-input nodes continues until there are no more tokens passing through 1-input node **310d**. Deletion of data elements from the equivalence class tables in RETE-net **390** is processed in the same manner as in the TREAT-net **490** (of Fig. **6**), except that delete tokens representing equivalence classes that have been deleted are passed to subsequent 2-input nodes.

The 1-input nodes **310a - 310c** operate in a similar manner to store data elements passing the respective tests performed by that 1-input node in the local memories **311a-311c** as entries in respective equivalence class tables. Then, rather than passing individual tokens representing matching corresponding data elements to respective 2-input nodes **320a-320c**, only tokens representing newly created equivalence class numbers **EC** are passed.

In general, tokens representing equivalence classes, or sets of equivalence classes, are received at left hand input ports of 2-input nodes, and tokens representing individual equivalence classes are received at right hand input ports of 2-input nodes in the same manner as tokens representing data elements or sets of data elements are received in the prior art 2-input nodes illustrated in Fig. **4**. These tokens are also processed by the 2-input nodes in a similar manner: comparing the significant attributes of the equivalence class represented by the token newly received at one input port to the significant attributes of the equivalence classes represented by the respective tokens previously stored in the memory associated with the other input port. If the significant attributes pass the tests performed by that 2-input node, a token is generated representing the combination of the equivalence classes in the two matching tokens.

As an example, tokens representing equivalence class numbers E-4-1, E-4-2, E-4-3 from equivalence class table **312d** in local memory **311d** of 1-input node **310d** are passed to the right hand input port of 2-input node **320c** and stored in the right hand memory **321f** in a similar manner as tokens representing data elements are stored in the RETE-net **290** of Fig. **4**. As they are received, these tokens are compared to all the tokens representing the combinations of equivalence classes previously received from 2-input node **320b** and stored in the left hand memory **321c**. As pairs of tokens satisfying the test of 2-input node **320c** are found, tokens representing the combination of equivalence classes of the two matching tokens are generated and passed to the result node **330** to be placed in the conflict set. The conflict set in result node **330** then contains a set of tokens representing combinations of equivalence classes whose significant attributes satisfy the rule corresponding to the RETE-net **390**, and not combinations of individual data elements whose attributes satisfy the rule.

The further processing of conflict sets **431** in the TREAT-net **490** of Fig. **6**, and **332** in the RETE-net **390** of Fig. **7** will be described below. In order to simplify the explanation, only the conflict set **332** in the RETE-net **390** of Fig. **7** will be discussed below, but this discussion applies to the processing of both conflict sets unless stated otherwise.

Each token passed to result node **330** does not represent a single set of data elements satisfying the conditions of the rule, but instead represents a set of equivalence classes whose significant attributes satisfy the conditions of the rule. As described above, each equivalence class may have a plurality of actual data elements which belong to it.

When a token is received in result node **330** to be placed in the conflict set **332**, the equivalence classes identified in that token (e.g. E-1-1, E-2-3, E-3-5 and E-4-2) are evaluated, in accordance with well known methods, to select the "best" combination of data elements belonging to the respective equivalence classes, which has not previously been used to fire that rule. This may be done by using the respective equivalence class numbers **EC** contained in the selected token in the conflict set to access the respective equivalence class tables holding the actual data elements which are members of those equivalence classes. (This will be discussed in more detail below.) Both the equivalence class identifiers, and the best unused combination of data elements belonging to the respective equivalence classes are stored in each token stored in the conflict set.

The data element combinations in each token in the conflict set **332** are evaluated, also in accordance with well known methods, to select the "best" such combination, which then is deemed to cause the rule to fire. After a rule is selected to be fired, but before it is actually fired, the next best unused combination of data elements from the respective equivalence classes contained in the selected token from the conflict set **332** is determined. If such a combination exists, those data elements replace the combination of data elements deemed to have fired the rule in that conflict set token.

If no such combination exists, this conflict set token is marked inactive. When a new data element is received in any of the equivalence class tables referred to by this conflict set token, then this conflict set token is made active again, and the above process is repeated.

In order to maintain the best unused combination of data elements associated with each conflict set token, each equivalence class, in the respective equivalence class tables, maintains a list of the conflict set tokens containing references to that equivalence class. Whenever a new data element is added to an equivalence class, because it is new and therefore may be better (in accordance with the above mentioned known selection method), the best unused combination of data elements associated with every conflict set token containing this equivalence class is reevaluated to determine whether it need be updated to include this new data element. Similarly if a member of an equivalence class is removed then every conflict set token containing this equivalence class must be checked. If its best unused combination does not refer to the data element being deleted then nothing needs to be done. If its best unused combination includes the data element being deleted then the best unused combination must be reevaluated to determine whether it need be updated to include this new data element.

In the prior art RETE-net of Fig. **4**, after a rule has fired, the token in the conflict set representing the combination of data elements deemed to have caused the rule to fire would then be deleted from the conflict set This was sufficient to indicate that that combination of data elements had been used, and was no longer eligible to fire that rule. In RETE-net **390** according to the present invention, after the rule has fired, the token in the conflict set deemed to have caused the rule to fire cannot be deleted because there may still be unused data elements in the equivalence class tables. However, the data elements which have previously been deemed to have caused the rule to fire must be made ineligible to fire the rule again.

This is done by maintaining a refraction set **335**. The refraction set **335** is a list of which specific data elements have previously been deemed to have fired the rule. After a token in the conflict set **332** has been selected, an entry is added to the refraction set **335** which indicates the combination of data elements used to fire this rule.

The selection process for determining the best unused combination of data elements corresponding to a conflict set token involves accessing all the equivalence class tables associated with this conflict set token. Then the best combination of data elements is selected in accordance with the above mentioned known selection method. The refraction set **335** is then checked to determine whether this combination has previously been used to fire this rule. If that combination of data elements is present in the refraction set, then the equivalence class tables are rechecked to select the next best combination of data elements. This too is checked against the entries in the refraction set **335**. This is repeated until an unused combination of data elements is found and placed in the corresponding conflict set token, or no such combinations of data elements are found, in which case the conflict set token is marked inactive, as discussed above. This process may be performed to evaluate every combination of data elements in the respective equivalence classes, or may be performed on an incremental basis to test for the next best combination of data elements.

While there has been shown and described a preferred embodiment, it is to be understood that various other adaptations and modifications may be made.

## Claims

1. An expert system including a computer system and a source program defining a set of rules and operations to be performed according to the rules, the source program being processed using a compiler to generate an executable program and associated data structure;
the computer system having a memory in which the executable program and associated data structure are loaded, the memory being also arranged to store a working database of actual elements to be processed by the expert system; the computer system being operable to process the data elements through the data structure to evaluate when the conditions of a rule are satisfied by the data elements and to actuate that rule and thereby to perform the operation associated with the actuated rule;
characterised in that the computer system is operable using tuples to generate, in the data structure, at least one equivalence class comprising a set of data elements defined by a common constraint, and a single token representing one set of equivalence classes, the set comprising equivalence classes having constraints which satisfy the rule conditions, the computer system having means operable to map back, from each set of equivalence classes, the data elements which satisfy the conditions of the rules, thereby enabling the associated operation to be performed.

2. An expert system according to claim 1, characterised in that the data structure includes a memory for storing data element tokens, a data element token being
generated by the data structure in response to an inputted data element, the data structure being operable to store the data element tokens in the memory in equivalence classes, each class being defined by the constraint, and each data element token being identified by that constraint and by other attributes associated with the data element, to generate an equivalence class token, for processing by the data structure, each time a new equivalence class is generated, a new equivalence class being generated every time a data element token is generated in response to an inputted data element having a uniquely valued constraint, and to evaluate the generated equivalence class tokens to establish those equivalence classes having constraints which satisfy the conditions of the rule and to thereby generate a conflict set of single tokens, each single token in the conflict set representing combinations of equivalence classes which have constraints satisfying the conditions of the rule.

3. An expert system according to claim 1 or claim 2, characterised in that the constraints are attributes of a data element which is compared to attributes of another data element.

4. An expert system according to any preceding claim, characterised in that the data structure is a RETE - net.

5. An expert system according to any of claims 1 to 3, characterised in that the data structure is a TREAT - net.

6. An expert system according to any of claims 2 to 5, characterised in that the computer system is operable to:
evaluate the equivalence classes identified in each conflict set token to select the best combination of data elements, in each equivalence class, for actuating the rule;
to determine, before the rule is actuated, in the conflict set token containing the best combination of data elements, the next combination of data elements, and to replace, in that conflict set token, the best combination with the next best combination, the conflict set token being marked inactive if no such combination exists; and to cause the data elements selected to actuate the rule to be ineligible to fire the rule again.

7. An expert system according to claim 6, characterised in that the computer system is further operable to re-evaluate each conflict set token to update the next best combination when a new data element is added to an equivalence class.

8. An expert system according to claim 6 or claim 7, characterised in that the data structure includes a memory holding tokens representing data elements previously used to actuate a rule, the contents of the memory being checked before a rule is actuated to ensure that ineligible data elements are not used to actuate that rule.

## Patentansprüche

1. Experten-System, das ein Computersystem und ein einen Satz von Regeln und entsprechend den Regeln auszuführenden Vorgängen definierendes Quellenprogramm enthält, wobei das Quellenprogramm mit Benutzung eines Kompilierers verarbeitet wird, um ein ausführbares Programm und zugehörige Datenstruktur zu erzeugen;
und das Computersystem einen Speicher besitzt, in dem das ausführbare Programm und die zugehörige Datenstruktur eingeladen sind, wobei der Speicher auch ausgelegt ist, eine Arbeits-Datenbasis von aktuellen, durch das Expertensystem zu verarbeitenden Elementen zu speichern; das Computersystem betreibbar ist, die Datenelemente durch die Datenstruktur zu verarbeiten, um zu bewerten, wenn die Bedingungen einer Regel durch die Datenelemente erfüllt sind, und um diese Regel zu betätigen und dadurch den mit der betätigten Regel verbundenen Vorgang durchzuführen;
**dadurch gekennzeichnet, daß** das Computersystem mit Benutzung von Tupeln betreibbar ist, um in der Datenstruktur mindestens eine Äquivalenzklasse zu erzeugen, welche einen durch ein gemeinsames Constraint (Begrenzungsrelation) bestimmten Satz von Datenelementen umfaßt, und ein einzelnes Zeichen, das einen Satz von Äquivalenzklassen darstellt, wobei der Satz Äquivalenzklassen umfaßt mit Constraints, welche die Regelbedingungen erfüllen, das Computersystem Mittel besitzt, um von jedem Satz von Äquivalenzklassen die Datenelemente zurückzutragen, welche die Bedingungen der Regeln erfüllen, und dadurch das Ausführen des zugehörigen Vorgangs zu ermöglichen.

2. Expertensystem nach Anspruch 1, **dadurch gekennzeichnet, daß** die Datenstruktur einen Speicher zum Speichern von Datenelementzeichen enthält, wobei ein Datenelementzeichen durch die Datenstruktur in Reaktion auf ein eingegebenes Datenelement erzeugt wird, die Datenstruktur betätigbar ist, die Datenelementzeichen in dem Speicher in Äquivalenzklassen zu speichern, wobei jede Klasse durch das Constraint bestimmt ist und jedes Datenelementzeichen durch das Constraint und durch andere mit dem Datenelement verbundene Attribute identifiziert wird, um ein Äquivalenzklassenzeichen zur Verarbeitung durch die Datenstruktur jedesmal zu erzeugen, wenn eine neue Äquivalenzklasse erzeugt wird, wobei eine neue Äquivalenzklasse jedesmal erzeugt wird, wenn ein Datenelementzeichen in Reaktion auf ein eingegebenes Datenelement mit einen eindeutig bewerteten Constraint erzeugt wird, und die erzeugten Äquivalenzklassenzeichen zu bewerten zum Einrichten dieser Äquivalenzklassen mit Constraints, welche die Bedingungen der Regel erfüllen, und dadurch einen Konfliktsatz von Einzelzeichen zu erzeugen, wobei jedes Einzelzeichen in dem Konfliktsatz Kombinationen von Äquivalenzklassen darstellt, welche die Bedingungen der Regel erfüllende Constraints besitzen.

3. Expertensystem nach Anspruch 1 oder 2, **dadurch gekennzeichnet, daß** die Constraints Attribute eines Datenelements sind, die mit den Attributen eines anderen Datenelements verglichen werden.

4. Expertensystem nach einem der vorangehenden Ansprüche, **dadurch gekennzeichnet, daß** die Datenstruktur ein RETE-Netz ist.

5. Expertensystem nach einem der Ansprüche 1 bis 3, **dadurch gekennzeichnet, daß** die Datenstruktur ein TREAT-Netz ist.

6. Expertensystem nach einem der Ansprüche 2 bis 5, **dadurch gekennzeichnet, daß** das Computersystem betätigbar ist zum:
Bewerten der in jedem Konfliktsatzzeichen identifizierten Äquivalenzklassen, um die beste Kombination von Datenelementen in jeder Äquivalenzklasse zum Betätigen der Regel zu wählen,
Bestimmen in dem die beste Kombination von Datenelementen enthaltenden Konfliktsatzzeichen die nächsten Kombination von Datenelementen, bevor die Regel betätigt wird, und Ersetzen in dem Konfliktsatzzeichen die beste Kombination durch die nächstbeste Kombination, wobei das Konfliktsatzzeichen als inaktiv markiert wird, wenn keine solche Kombination existiert; und Veranlassen der zum Betätigen der Regel ausgewählten Datenelemente, ungeeignet zu sein, die Regel wieder zu zünden.

7. Expertensystem nach Anspruch 6, **dadurch gekennzeichnet, daß** das Computersystem weiter zur Neubewertung jedes Konfliktsatzzeichens betätigbar ist, um die nächstbeste Kombination zu aktualisieren, wenn ein neues Datenelement zu einer Äquivalenzklasse hinzugefügt wird.

8. Expertensystem nach Anspruch 6 oder 7, **dadurch gekennzeichnet, daß** die Datenstruktur einen Speicher enthält, der Zeichen hält, die vorher zur Betätigung einer Regel benutzte Datenelemente darstellt, wobei die Inhalte des Speichers überprüft werden, bevor eine Regel betätigt wird, um sicherzustellen, daß keine ungeeigneten Datenelemente zur Betätigung jener Regel benutzt werden.

## Revendications

1. Système expert comprenant un système d'ordinateur et un programme source, définissant un ensemble de règles et d'opérations devant être exécutées en fonction des règles, le programme source étant traité moyennant l'utilisation d'un compilateur pour produire un programme exécutable et une structure de données associée ; le système d'ordinateur comportant une mémoire, dans laquelle le programme exécutable et la structure de donnée associée sont chargée, la mémoire étant agencée également de manière à mémoriser une base de données de travail d'éléments actuels devant être traités par le système expert ; le système d'ordinateur pouvant agir de manière à traiter les éléments de données au moyen de la structure de données pour évaluer le moment où les conditions d'une règle sont satisfaites par les éléments de données et appliquer cette règle et exécuter de ce fait l'opération associée à la règle appliquée ;
caractérisé en ce que le système d'ordinateur peut agir en utilisant des nuplets pour produire, dans la structure de données, au moins une classe d'équivalence comprenant un ensemble d'éléments de données définis par une contrainte commune, et un seul jeton représentant un ensemble de classes d'équivalence, l'ensemble comprenant des classes d'équivalence ayant des contraintes qui satisfont aux conditions de la règle, le système d'ordinateur comprenant des moyens pouvant agir de manière à réaliser un transfert inverse, à partir de chaque ensemble de classes d'équivalence, des éléments de données qui satisfont aux conditions des règles, ce qui permet d'exécuter l'opération associée.

2. Système expert selon la revendication 1, caractérisé en ce que la structure de données comprend une mémoire servant à mémoriser des jetons d'éléments de données, un jeton d'élément de données étant produit par la structure de données en réponse à un élément de données introduit, la structure de données pouvant agir de manière à mémoriser les jetons d'éléments de données dans la mémoire dans des classes d'équivalence, chaque classe étant définie par la contrainte, et chaque jeton d'élément de données étant identifié par cette contrainte et par d'autres attributs associés à l'élément de données, pour produire un jeton de classe d'équivalence, pour le traitement de la structure de données, chaque fois qu'une nouvelle classe d'équivalence est produite, une nouvelle classe d'équivalence étant produite chaque fois qu'un jeton d'élément de données est produit en réponse à un élément de données introduit possédant une contrainte à valeur unique, et pour évaluer les jetons produits de classes d'équivalence de manière à établir les classes d'équivalence contenant des contraintes qui satisfont aux conditions de la règle et produire de ce fait un ensemble conflictuel de jetons uniques, chaque jeton unique dans l'ensemble conflictuel représentant des combinaisons de classes d'équivalence qui ont des contraintes satisfaisant aux conditions de la règle.

3. Système expert selon la revendication 1 ou la revendication 2, caractérisé en ce que les contraintes sont des attributs d'un élément de données, qui est comparé à des attributs d'un autre élément de données.

4. Système expert selon l'une quelconque des revendications précédentes, caractérisé en ce que la structure de données est un réseau RETE.

5. Système expert selon l'une quelconque des revendications 1 à 3, caractérisé en ce que la structure de données est un réseau TREAT.

6. Système expert selon l'une quelconque des revendications 1 à 5, caractérisé en ce que le système d'ordinateur peut agir de manière à :
évaluer les classes d'équivalence identifiées dans chaque jeton d'ensemble de conflit pour sélectionner la meilleure combinaison des éléments de données, dans chaque classe d'équivalence, pour l'application de la règle ;
déterminer la combinaison suivante d'éléments de données, avant que la règle soit appliquée, dans le jeton d'ensemble de conflit contenant la meilleure combinaison d'éléments de données, et remplacer dans ce jeton d'ensemble de conflit, la meilleure combinaison par la nouvelle meilleure combinaison, le jeton d'ensemble de conflit étant marqué comme inactif si aucune combinaison de ce type n'existe ; et amener les éléments de données sélectionnés à appliquer la règle de manière qu'elle soit inapte à appliquer à nouveau la règle.

7. Système expert selon la revendication 6, caractérisé en ce que le système d'ordinateur peut en outre agir de manière à réévaluer chaque jeton d'ensemble de conflit pour mettre à jour la nouvelle meilleure combinaison lorsqu'un nouvel élément de données est ajouté à une classe d'équivalence.

8. Système expert selon la revendication 6 ou la revendication 7, caractérisé en ce que la structure de données comprend une mémoire conservant des jetons représentant des éléments de données utilisés au préalable pour appliquer une règle, le contenu de la mémoire étant contrôlé avant qu'une règle soit appliquée, de manière à s'assurer que des éléments de données inaptes ne sont pas utilisés pour appliquer cette règle.
